# EUROPEAN PATENT APPLICATION

(11) **EP 1 627 809 A2**
(43) Date of publication of application: **22.02.2006**
(21) Application number: 05015696.7
(22) Date of filing: 19.07.2005
(51) Int. Cl.: B62L 1/00, F16D 65/12, B60T 1/06

(54) **Bicycle disk brake rotor with laminated components having differing thicknesses**

(30) Priority: 19.08.2004 US 923452
(71) Applicant: SHIMANO INC., Osaka 590-8577 (JP)
(72) Inventor: Takizawa, Shinichi, Izumisano Osaka (JP)
(74) Representative: GROSSE BOCKHORNI SCHUMACHER

(57) **Abstract**

A bicycle disk brake rotor apparatus 22 comprises a first rotor member 90, a second rotor member 91 a, and a third rotor member 91b, wherein the first rotor member 90 is attached to and is disposed between the second rotor member 91 a and the third rotor member 91b. A thickness of the second rotor member 91 a is different from a thickness of the third rotor member 91b.

## Description

### BACKGROUND OF THE INVENTION

The present invention is directed to bicycles and, more particularly, to a bicycle disk brake rotor.

Conventional bicycle disk brake devices comprise a disk rotor that rotates with the bicycle wheel, and calipers with brake pads that frictionally contact the disk rotor to slow or stop the wheel. The disk rotor may be a metal member that comprises a mounting member and a ring-shaped rotor member fixed to the mounting member, wherein the mounting member is structured to be mounted to the bicycle wheel hub. Since bicycles are propelled by human power, reducing the weight of the bicycle components is an important objective of many bicycle manufacturers. This includes reducing the weight of disk brake devices. On the other hand, it is also desirable to resist rotor wear caused by friction with the brake pads while providing proper heat dissipation.

One example of a disk rotor with laminated components used in the automotive field is disclosed in Japanese Patent Number (JP) 2,679,162. That disk rotor comprises an annular aluminum first rotor member sandwiched between a pair of annular stainless steel second rotor members. The stainless steel second rotor members provide wear resistance, while the aluminum first rotor member provides heat dissipation.

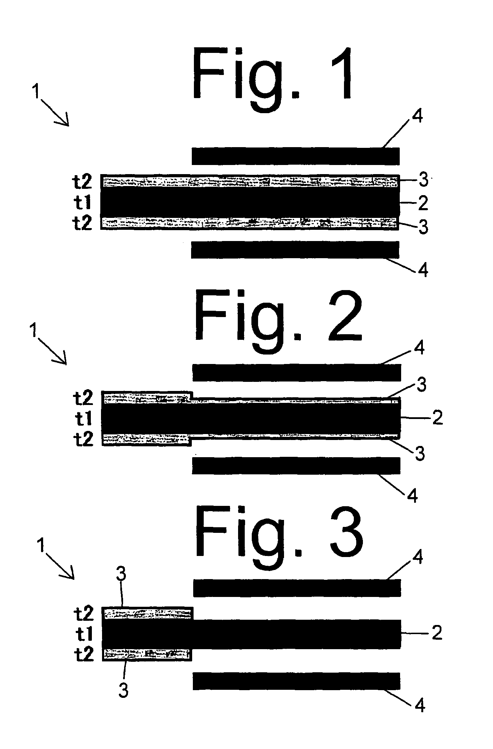

Fig. 1 is a schematic diagram of a known disk rotor 1, not necessarily in the prior art, that resembles the disk rotor disclosed in JP 2,679,162. This rotor comprises a first rotor member 2 sandwiched between a pair of second rotor members 3, wherein a pair of brake pads 4 contact respective outer surfaces of the second rotor members 3 during use. The thicknesses t2 of the second rotor members 3 typically are the same to simplify manufacturing. As a result, the second rotor members 3 typically wear evenly during use as shown in Fig. 2. Eventually, the brake pads 4 completely wear away the second rotor members 3 as shown in Fig. 3. At that time, braking effectiveness decreases significantly. The rider readily notices such reduced braking effectiveness and usually considers it unacceptable.

### SUMMARY OF THE INVENTION

The present invention is directed to various features of a bicycle disk brake rotor apparatus. In one embodiment, a bicycle disk brake rotor apparatus comprises a first rotor member, a second rotor member, and a third rotor member, wherein the first rotor member is attached to and is disposed between the second rotor member and the third rotor member. A thickness of the second rotor member is different from a thickness of the third rotor member. Additional inventive features will become apparent from the description below, and such features alone or in combination with the above features may form the basis of further inventions as recited in the claims and their equivalents.

### BRIEF DESCRIPTION OF THE DRAWINGS

Fig. 1 is a schematic diagram of a known disk rotor apparatus;
Fig. 2 is a schematic diagram of the disk rotor apparatus shown in Fig. 1 with the outer braking layers partially worn;
Fig. 3 is a schematic diagram of the disk rotor apparatus shown in Fig. 1 with the outer braking layers completely worn;
Fig. 4 is a side view of a bicycle with a particular embodiment of a disk brake apparatus;
Fig. 5 is a side view of the disk brake apparatus;
Fig. 6 is an exploded schematic view of the brake caliper assembly;
Fig. 7 is a plan view of a particular embodiment of a brake operating device;
Fig. 8 is a schematic diagram of a particular embodiment of a hydraulic circuit for the disk brake apparatus;
Fig. 9(A) is a plan view of a first rotor member;
Fig. 9(B) is a plan view of a second rotor member;
Fig. 10 is a cross sectional view of a portion of the brake rotor;
Fig. 11 is a flow chart of a particular embodiment of a process for producing the brake rotor;
Fig. 12 is a schematic diagram of the disk rotor apparatus shown in Fig. 10 in a partially worn state; and
Fig. 13 is a schematic diagram of the disk rotor apparatus shown in Fig. 10 showing a second rotor member in a completely worn state.

### DETAILED DESCRIPTION OF THE EMBODIMENTS

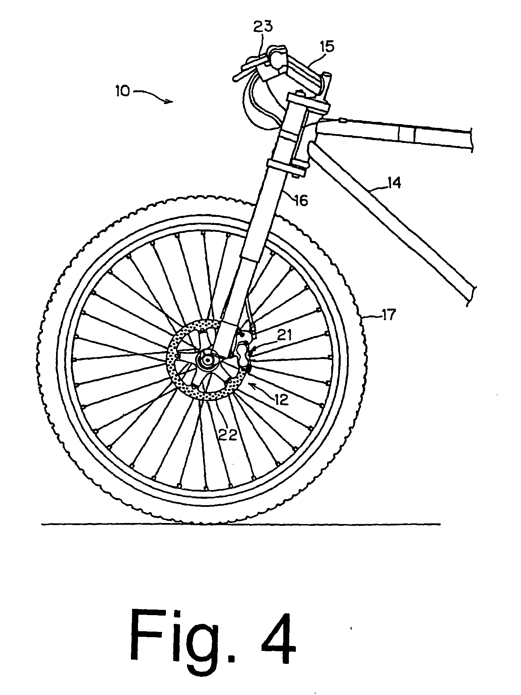

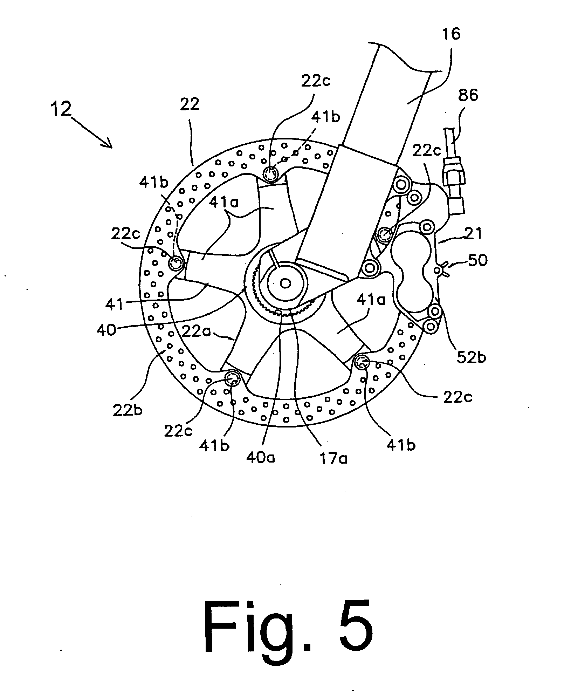

Fig. 4 is a side view of a bicycle 10 with a particular embodiment of a complete disk brake apparatus 12, and Fig. 5 is a side view of disk brake apparatus 12. Bicycle 10 is a conventional one with a frame 14 supporting a handlebar 15, front and rear forks 16 (only the front fork is shown), front and rear wheels 17 (only the front wheel is shown), and a drive device comprising a sprocket and chain (not shown). Since the structure of such a conventional bicycle is well known in the field, further description if its structure shall be omitted.

Disk brake apparatus 12 comprises a brake caliper 21 mounted on front fork 16, a brake rotor 22 attached to a hub 17a of front wheel 17 so that brake rotor 22 rotates integrally with front wheel 17, and a brake operating mechanism 23. Brake caliper 21 is attached to front fork 16 near brake rotor 22, and it applies a frictional force to brake rotor 22 in response to the operation of brake operating mechanism 23 to stop the rotation of brake rotor 22 and front wheel 17.

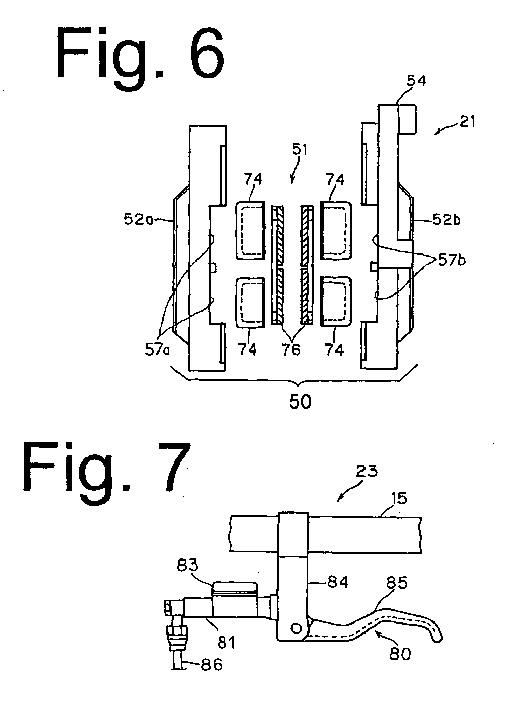

As shown in Figs. 5 and 6, brake caliper 21 comprises a housing 50 and a piston unit 51. Housing 50 is constructed of a thermally conducting material such as an aluminum alloy, and it comprises a first housing member 52a and a second housing member 52b bolted together in a conventional manner to form a slot to receive brake rotor 22 therebetween. Housing members 52a and 52b have substantially the same shape, except that hydraulic tubing 86 for brake operating mechanism 23 is connected to second housing member 52b to supply brake oil to both housing members 52a and 52b. Second housing member 52b also has an outwardly extending flange that forms an attachment member 54 for bolting brake caliper 21 to front fork 16.

As shown in Fig. 6, piston unit 51 comprises four pistons 74 and a pair of brake pads 76. Pistons 74 slidably fit into round cylinders 57a and 57b formed in housing members 52a and 52b so as to move between a brake release position and a braking position. Brake pads 76 move integrally with pistons 74. Thus, when pistons 74 move from the brake release position to the braking position, the brake pads 76 also move from the brake release position to the braking position. When in the braking position, brake pads 76 press against and apply a frictional force to brake rotor 22 to thereby decrease or stop rotation of brake rotor 22 and front wheel 17. When in the brake release position, the brake pads 76 are spaced apart from brake rotor 22, thus allowing brake rotor 22 and front wheel 17 to freely rotate.

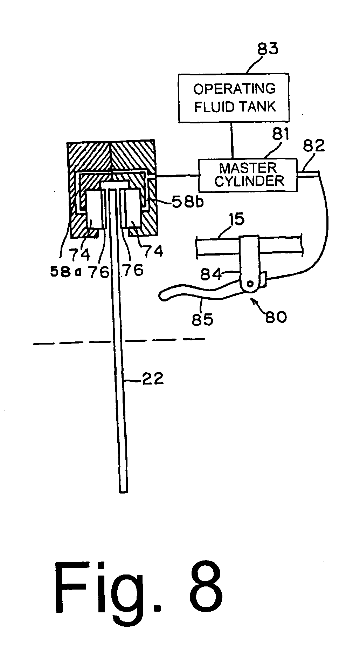

As shown in Figs 7 and 8, the brake operating mechanism 23 is attached to handlebar 15. Brake operating mechanism 23 comprises a brake lever assembly 80, a master cylinder 81, a piston 82, and an operating fluid tank 83. Brake lever assembly 80 comprises a bracket 84 mounted on handlebar 15 and a lever component 85 pivotably mounted on bracket 84. Bracket 84 is integrally formed with master cylinder 81, and piston 82 and operating fluid tank 83 are supported by bracket 84. Piston 82 is slidingly disposed within master cylinder 81, and operating fluid tank 83 is in fluid communication with master cylinder 81. One end of piston 82 is connected to lever component 85 so that piston 82 reciprocates inside master cylinder 81 in response to the pulling and releasing of lever component 85. Pulling lever component 85 causes pressurized oil to move through the hydraulic tubing 86 connected to brake caliper 21, the pressurized oil moves pistons 74, brake pads 76 contact and apply frictional force to brake rotor 22, and the front wheel 17 is braked.

As shown in Fig. 5, brake rotor 22 comprises a centrally disposed hub mounting member 22a attached to hub 17a, a ring-shaped rotor member 22b for contacting brake pads 76, and a plurality of fixing pins 22c that fix rotor member 22b to hub mounting member 22a. In this embodiment, hub mounting member 22a is constructed of an aluminum alloy and comprises a centrally disposed cylindrical hub attachment component 40 and a rotor attachment component 41. Hub attachment component 40 is attached to hub 17a through a splined component 40a, and rotor attachment component 41 extends radially outwardly from hub attachment component 41. More specifically, rotor attachment component 41 has five arm components 41a extending radially outwardly from hub attachment component 40. A fixing hole 41b for fixing hub attachment component 41 to rotor member 22b is formed at the tip of each arm component 41 a.

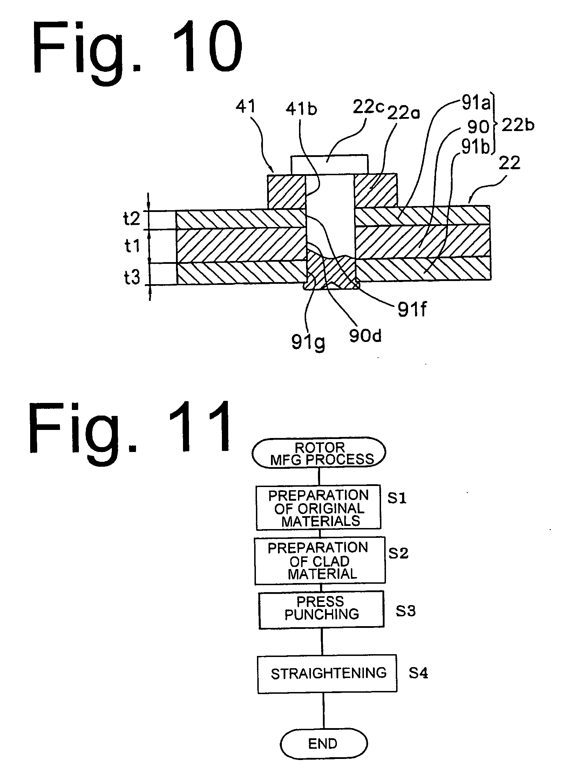

As shown in Fig. 10, rotor member 22b may be a laminated structure comprising a first rotor member 90 sandwiched between a second rotor member 91a and a third rotor member 91b. First rotor member 90 may be formed from aluminum, which has a relatively high thermal conductivity, whereas second and third rotor members 91a and 91b may be formed from stainless steel, which has higher braking wear resistance than aluminum but less thermal conductivity than aluminum. In this embodiment, the second and third rotor members 91a and 91b may be press welded to opposite sides of first rotor member 90.

In this embodiment, a thickness t1 of first rotor member 90 is from approximately 0.5 mm to approximately 1.5 mm, and thicknesses t2 and t3 of second member 91 a and third rotor member 91b, respectively, are from approximately 0.2 mm to approximately 0.8 mm. Setting the thicknesses of rotor members 90, 91a and 91b within those ranges results in a relatively thick centrally disposed first rotor member 90 that has lighter weight while preserving strength, and the relatively thinner second and third rotor members 91a and 91 b also contribute to lighter weight while preserving strength and wear resistance. Unlike the prior art, however, in this embodiment the thicknesses t2 and t3 of second and third rotor members 91 a and 91b are different. More specifically, thickness t2 of second rotor member 91 a is less than thickness t3 of third rotor member 91b.

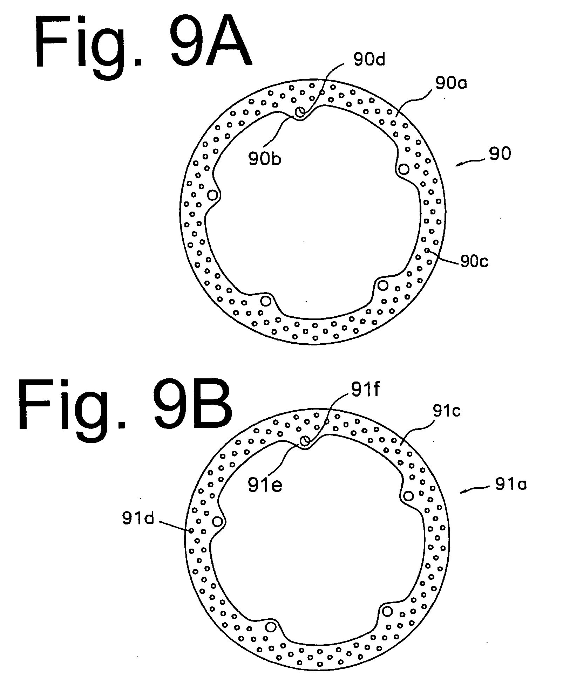

Fig. 9(A) is a plan view of first rotor member 90, and Fig. 9(B) is a plan view of second rotor member 91 a. Third rotor member 91b has the same structure as second rotor member 91 a, so a separate description of third rotor member 91b shall be omitted. Furthermore, first rotor member 90 and second and third rotor members 91a and 91b have the same shape. As shown in Fig. 9(A), first rotor member 90 comprises a ring-shaped member 90a with a plurality of circumferentially distributed holes 90c for ventilation and weight reduction. First rotor member 90 also includes a plurality of circumferentially distributed and radially inwardly extending fixing components 90b, wherein each fixing component 90b has a corresponding fixing hole 90d. As shown in Fig. 9(B), second rotor member 91 a comprises a ring-shaped member 9 1 c with a plurality of circumferentially distributed holes 91d and a plurality of circumferentially distributed and radially inwardly extending second fixing components 91 e, wherein each second fixing component 91e has a corresponding fixing hole 91f. As shown in Fig. 10, each fixing hole 90d in first rotor member 90 is aligned with a corresponding one of the fixing holes 91f in second rotor member 91 a and a corresponding fixing hole 91 g in third rotor member 91b for receiving a fixing pin 22c therethrough. Each fixing pin 22c may be formed from aluminum and, as noted above, fixing pins 22c are used to fix rotor member 22b to hub mounting member 22a.

Fig. 11 is a flow chart of a particular embodiment of a process for producing rotor member 22b. In general, rotor member 22b may be produced by laminating an aluminum sheet between a pair of stainless steel sheets and then stamping the laminated structure. More specifically, an aluminum sheet that will form first rotor member 90 and the stainless steel sheets that will form the second and third rotor members 91 a and 91 b are prepared in a step S1. Then, in Step S2, the aluminum sheet is sandwiched between the pair of stainless steel sheets, and the sheets are press welded by means of hot rolling or forge welding to produce a laminated or cladded structure. In Step S3 the resulting laminated structure is press punched to form the rotor member 22b having the desired shape. Any warping in the resulting rotor material is then corrected to finish the rotor member 22b in a Step S4.

The foregoing process allows a first rotor member 90 to be joined with second and third rotor members 91a and 91b to form an overall rotor member 22b in a simple manner, wherein the individual rotor members may be formed of different materials. The resulting rotor member 22b then may be fixed to hub mounting member 22a, thus simplifying the manufacturing process. Also, the method of fixing rotor member 22b to hub mounting member 22a prevents rotor members 91 from separating from rotor member 90.

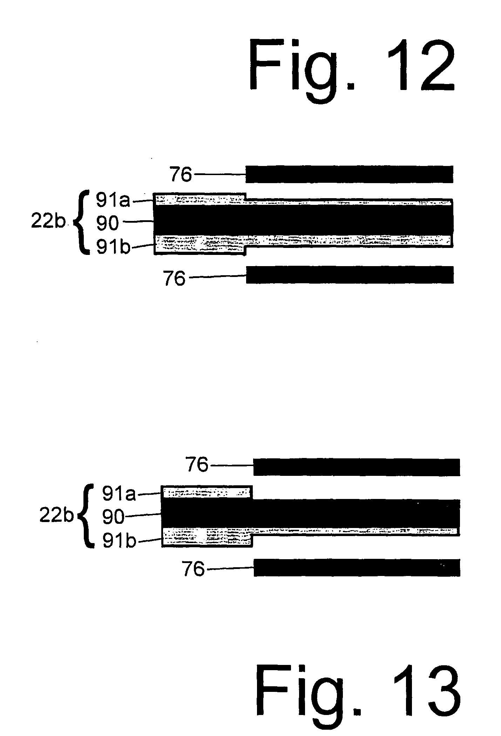

Fig. 12 is a schematic diagram of rotor member 22b in a partially worn state. Although brake pads 76 wear second and third rotor members 91a and 91b evenly, the remaining portion of second rotor member 91 a is less than the remaining portion of third rotor member 91b, since the original thickness t2 of second rotor member 91 a was less than the original thickness of third rotor member 91b. Fig. 13 is a schematic diagram of rotor member 22b after further use. The thinner second rotor member 91a and the even wear produced by brake pads 76 results in second rotor member 91a being completely worn away, while third rotor member 91b still has some thickness remaining. In this case, braking effectiveness will decrease, but not as drastically as if both second and third rotor members 91a and 91b were completely worn. The rider will notice the decrease in braking effectiveness and can replace the rotor member 22b before braking effectiveness becomes unacceptable.

While the above is a description of various embodiments of inventive features, further modifications may be employed without departing from the spirit and scope of the present invention. For example, in the above embodiment, the first rotor member 90 was made of aluminum, and the second and third rotor members 91 a and 91 b were made of stainless steel, but other materials could be used. Preferably, but not necessarily, second and third rotor members 91a and 91b should have higher wear resistance than first rotor member 90, and first rotor member 90 should be lighter and have better thermal conductivity than second and third rotor members 91 a and 91b in order to ensure lighter weight and better heat dissipation. For example, first rotor member 90 could be made of a light carbon fiber-reinforced resin or carbon graphite, and second and third rotor members 91 a and 91b may be made of a ceramic. First rotor member 90 also may be made of a titanium or magnesium alloy.

In the described embodiments, threaded hexagonal bolts and fixing pins were used to fix rotor member 22b to the other hub components, but other fixing schemes may be used, such as butt deposition, press bonding, or welding.

While the first, second and third rotor members 90 and 91 were press welded together and then attached as a unit to hub mounting member 22a, such press welding is not necessary. Instead, the rotor members may be individually mounted to hub mounting member 22a.

The size, shape, location or orientation of the various components may be changed as desired. Components that are shown directly connected or contacting each other may have intermediate structures disposed between them. The functions of one element may be performed by two, and vice versa. The structures and functions of one embodiment may be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the scope of the invention should not be limited by the specific structures disclosed or the apparent initial focus or emphasis on a particular structure or feature.

## Claims

1. A bicycle disk brake rotor apparatus (22) comprising:
a first rotor member (90);
a second rotor member (91a);
a third rotor member (91b);
wherein the first rotor member (90) is attached to and is disposed between the second rotor member (91 a) and the third rotor member (91b); and
wherein a thickness of the second rotor member (91a) is different from a thickness of the third rotor member (91b).

2. The apparatus (22) according to claim 1 wherein the first rotor member (90) has greater thermal conductivity than the second rotor member (91 a) and the third rotor member (91b).

3. The apparatus (22) according to claim 1 or 2 wherein the first rotor member (90) comprises aluminum, and wherein the second rotor member (91a) and the third rotor member (91b) each comprises stainless steel.

4. The apparatus (22) according to any of the preceding claims wherein each of the second rotor member (91a) and the third rotor member (91b) is formed with a hardening process.

5. The apparatus (22) according to any of the preceding claims wherein the second rotor member (91a) and the third rotor member (91b) are pressure welded to the first rotor member (90).

6. The apparatus (22) according to any of claims 1 to 4 wherein the second rotor member (91a) and the third rotor member (91b) are hot rolled to the first rotor member (90).

7. The apparatus (22) according to any of claims 1 to 4 wherein the second rotor member (91a) and the third rotor member (91b) are forge welded to the first rotor member (90).

8. The apparatus (22) according to any of the preceding claims wherein the first rotor member (90) has a thickness of from approximately 0.5 millimeters to approximately 1.5 millimeters, and wherein the second rotor member (91 a) and the third rotor member (91b) each has a thickness of from approximately 0.2 millimeters to approximately 0.8 millimeters.

9. The apparatus (22) according to any of the preceding claims wherein each of the second rotor member (91a) and the third rotor member (91b) is formed of a material having greater braking wear resistance than the first rotor member (90).
